# EUROPEAN PATENT SPECIFICATION

(11) **EP 2 397 679 B1**
(45) Date of publication and mention of the grant of the patent: **06.04.2016**
(21) Application number: 11170012.6
(22) Date of filing: 15.06.2011
(51) Int. Cl.: F02D 41/00, F02D 41/34, F02D 41/40, F02M 69/04, F02B 17/00, F02D 13/02

(54) **Internal Combustion Engine**
Verbrennungsmotor
Moteur à combustion interne

(30) Priority: 15.06.2010 JP 2010136488
(43) Date of publication of application: 21.12.2011
(73) Proprietor: Mitsubishi Jidosha Kogyo Kabushiki Kaisha, Tokyo 108-8410 (JP)
(72) Inventor: Tanaka, Dai, Tokyo 108-8410 (JP)
(74) Representative: Vossius & Partner Patentanwälte Rechtsanwälte mbB

(56) References cited:
- EP-A2- 1 798 393
- DE-C1- 10 148 651
- JP-A- 2003 239 749
- US-A- 4 388 909
- US-A- 4 782 810

## Description

### Technical Field

The present invention relates to an internal combustion engine which controls a condition of fuel injection into an intake passage, thereby improving performance, without providing within a cylinder a fuel injection device which injects fuel directly into the cylinder.

### Background Art

As an internal combustion engine (an engine), there is an engine containing a direct-injection injector which is provided within a cylinder to inject fuel into the cylinder directly, and a port injection injector which is provided in an intake passage to inject fuel into the intake passage (refer to Patent Document 1).

In the engine containing the direct-injection injector and the port-injection injector, through so-called stratified lean burn in which an air-fuel mixture having rich fuel can be gathered around an ignition plug by directly injecting high-pressure fuel into the cylinder from the direct-injection injector, combustion can be made in a state in which the total air-fuel ratio is lean and a significant reduction in fuel consumption can be realized. Also, a latent heat of vaporization of the fuel can be utilized for cooling the intake air, and the temperature of the air-fuel mixture can be lowered to suppress the occurrence of knocking.

Moreover, since the air density can be raised by the cooling of the intake air, the intake air amount at the time of full-load can be increased to improve performance. Additionally, through the momentum of a mist directly injected into the cylinder, the turbulence within a cylinder can be intensified, flame propagation can be promoted, and combustion stability can be improved. Thereby, the EGR (Exhaust Gas Recirculation) introduction amount can be increased to reduce fuel costs. Additionally, by injecting fuel into the intake passage from the port-injection injector, homogenization of an air-fuel mixture can be promoted in a low-load operation region where the flow within a cylinder is weak and the homogeneity of the air-fuel mixture deteriorates.

However, in the engine containing the direct-injection injector and the port-injection injector, the tip of the direct-injection injector provided within the cylinder may be exposed to high-temperature and high-pressure combustion gas. For this reason, even in a case where fuel is injected from the port-injection injector in order to promote the homogeneity of the air-fuel mixture, it is necessary to prolong the injection of the fuel from the direct-injection injector in order to cool the tip of the direct-injection injector through the cooling action of the fuel injection. Thus, in present conditions, fuel injection cannot be performed only from the port-injection injector. Additionally, since a portion of the fuel injected from the direct-injection injector collides against the wall of a combustion chamber, and is burned in a liquid film state, there is a problem in that the emission of particulate substances is large. Moreover, since fuel is injected at high pressure from the direct-injection injector, there is a concern that the power loss of a high-pressure pump will affect performance.

Additionally, since the direct-injection injector requires securing of temperature resistance and pressure resistance, and the tip thereof is exposed to combustion gas, deposits are apt to be accumulated depending on the operating conditions due to the product of the combustion or the carbonization of the fuel, and measures for the deposits are required. For this reason, in the internal combustion engine containing the direct-injection injector, there is a problem in that the cost of the combustion injection system is increased.

### Citation List

[Patent Document 1] Japanese Patent Publication No. 2009-228447

### Summary of Invention

### Technical Problem

The invention has been made in consideration of the above circumstances, and the object thereof is to provide an internal combustion engine which can control the conditions of fuel injection into an intake passage without providing within a cylinder a direct-injection injector which injects fuel directly into the cylinder, thereby maintaining performance from the performance in a case where fuel is directly injected into the cylinder, and obtaining high performance.

Particularly, the object of the invention is to provide an internal combustion engine which includes an exhaust gas recirculation means (EGR device) which recirculates a part of exhaust gas to an intake system, and which can inject fuel into an intake passage during intake into a cylinder, thereby intensifying the turbulence within the cylinder, and improving combustion stability.

### Solution to Problem

According to an advantageous aspect of the invention, there is provided an internal combustion engine, comprising:
an injector which injects fuel into an intake passage;
an intake stroke injection means which causes the injector to inject fuel in an intake stroke;
an exhaust stroke injection means which causes the injector to inject fuel in an exhaust stroke;
an exhaust gas recirculation means which recirculates a part of exhaust gas to an intake system;
a setting means which sets the conditions of a recirculation of the exhaust gas by the exhaust gas recirculation means; and
an injection control means which controls an operation ratio of the intake stroke injection means and the exhaust stroke injection means according to the condition of the recirculation of the exhaust gas by the setting means.

In the invention, fuel is injected into the intake passage by the intake stroke injection means during an intake stroke, and the fuel is made to flow into a cylinder when an intake valve is opened. Additionally, fuel is injected into the intake passage by the exhaust stroke injection means during an exhaust stroke according to the rotation speed and the load of the engine, and the fuel pressure. The operation ratio of the intake stroke injection means and the exhaust stroke injection means is controlled by the injection control means.

In the fuel injection using the intake stroke injection means, fuel is injected while the intake valve is being opened, whereby adhesion of fuel to a wall surface is suppressed in order to utilize the latent heat of vaporization of the fuel not for cooling the wall surface with a large specific heat but for cooling the intake air, thereby lowering the temperature of the air-fuel mixture to suppress the occurrence of knocking, and raising the air density to increase the intake air amount at the full load.

Additionally, by injecting fuel when the intake valve is opened, a stratified air-fuel mixture is formed within a cylinder to gather a fuel-rich portion of the air-fuel mixture around the ignition plug, thereby improving the stability of the ignition caused by spark ignition. Moreover, by suppressing the collision of a mist against a wall surface and making the mist flow into a cylinder directly, intra-cylinder turbulence can be intensified through the momentum of the mist, and it is possible to promote flame propagation, and improve combustion stability. In fuel injection using the injector, while the intake valve is being opened, fuel passes between a valve seat and an umbrella portion and is directed to the inside of a cylinder.

In the fuel injection using the exhaust stroke injection means, the fuel (air-fuel mixture) which is mixed with air within the intake port in advance is made to flow into a cylinder. Thus, the homogeneity of the air-fuel mixture is promoted in a low-load operation region where the flow within the cylinder is weak, and homogenization of the air-fuel mixture deteriorates. Since the injector is provided in the intake passage, a simple structure is obtained which is not exposed to high-temperature and high-pressure combustion gas and does not require securing of temperature resistance and pressure resistance. Additionally, since it is not necessary to inject high-pressure fuel, a high-pressure pump is unnecessary, and the effect on performance resulting from the power loss of the pump can be made small.

Also, since the conditions of the recirculation of the exhaust gas using the exhaust gas recirculation means is set by the setting means, and the operation ratio of the intake stroke injection means and the exhaust stroke injection means is controlled according to the conditions of the recirculation of the exhaust gas, the turbulence within a cylinder can be intensified by injecting fuel in an intake stroke according to the recirculation amount of the exhaust gas.

By controlling the conditions of the fuel injection to the intake passage without providing within a cylinder a direct-injection injector which injects fuel directly into the cylinder, i.e., by setting the ratio of the fuel injection in an intake stroke and the fuel injection in an exhaust stroke according to the operating conditions, it is possible to maintain performance from the performance in a case where fuel is directly injected into the cylinder, and obtain high performance. Particularly, by including the exhaust gas recirculation means (EGR device) which recirculates a part of the exhaust gas to the intake system, and injecting fuel into the intake passage during intake into the cylinder, it is possible to intensify the turbulence within the cylinder, and improve combustion stability.

The setting means sets a target recirculation amount of the exhaust gas, based on a rotation speed and a load of the internal combustion engine.

In the invention, the operation ratio of the intake stroke injection means and the exhaust stroke injection means can be controlled according to the target recirculation amount of the exhaust gas.

The injection control means may increase the operation ratio of the intake stroke injection means to increase a fuel injection ratio in an intake stroke, in a case where it is determined that the target recirculation amount set by the setting means exceeds a predetermined value.

In the invention, when the target recirculation amount exceeds a predetermined value, the operation ratio of the intake stroke injection means can be increased to increase the fuel injection ratio in the intake stroke, thereby intensifying the turbulence within a cylinder.

The injection control means may set a fuel pressure to be increased when the operation ratio of the intake stroke injection means is increased.

In the invention, the turbulence within a cylinder can be intensified by setting the fuel pressure to be high when the operation ratio of the intake stroke injection means is increased.

The internal combustion engine may further comprise a fuel pressure detecting means which detects a fuel pressure. The exhaust gas recirculation means may reduce the target recirculation amount of the exhaust gas in a case where an actual fuel pressure detected by the fuel pressure detecting means is less than a target fuel pressure.

In the invention, in a case where the actual fuel pressure is less than a target fuel pressure, the target recirculation amount of the exhaust gas is reduced to reduce the recirculation amount, thereby suppressing deterioration of fuel costs caused by a change in the turbulence in a cylinder.

### Advantageous Effects of Invention

In the internal combustion engine of the invention, it is possible to control the conditions of fuel injection into the intake passage without providing within a cylinder a direct-injection injector which injects fuel directly into the cylinder, thereby maintaining performance in a case where fuel is directly injected into the cylinder, and obtaining high performance.

Particularly, by including the exhaust gas recirculation means (EGR device) which recirculates a part of the exhaust gas to an intake system, and injecting fuel into the intake passage during intake into the cylinder (mainly, a low-load and low-rotation region where the momentum of intake air is small), it is possible to intensify the turbulence within the cylinder to promote flame propagation, and improve combustion stability.

### Brief Description of Drawings

Fig. 1 is a schematic configuration view of an internal combustion engine related to one embodiment of the invention.
Fig. 2 is configuration view of the chief parts in Fig. 1.
Fig. 3 is a schematic block diagram showing the functions of injection control.
Fig. 4 is a control flow chart of fuel injection.
Fig. 5 is a control flow chart of fuel injection.
Fig. 6 is a map for setting an EGR amount.

### Description of Embodiments

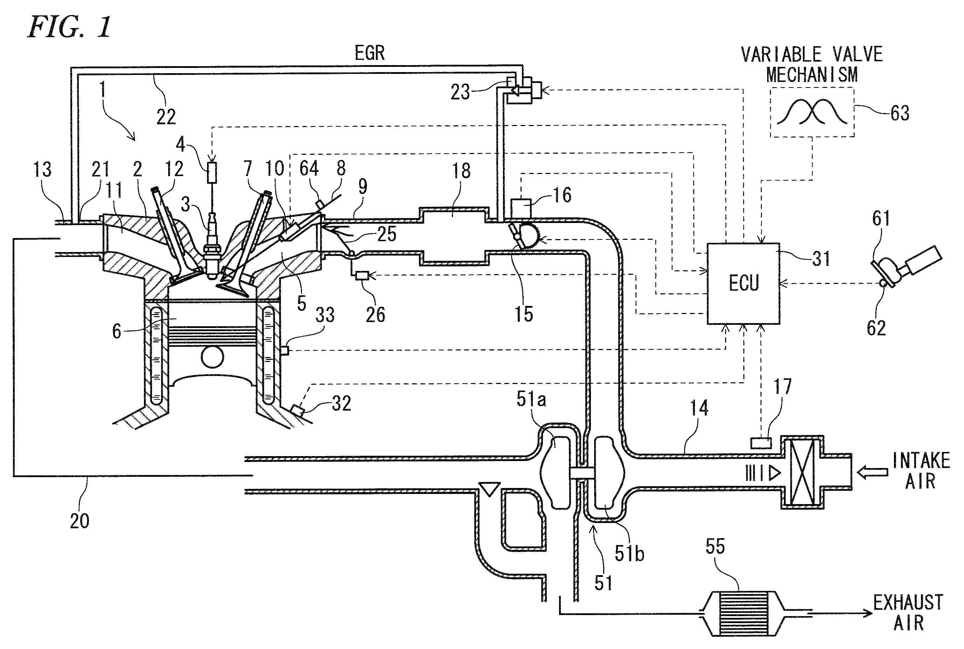

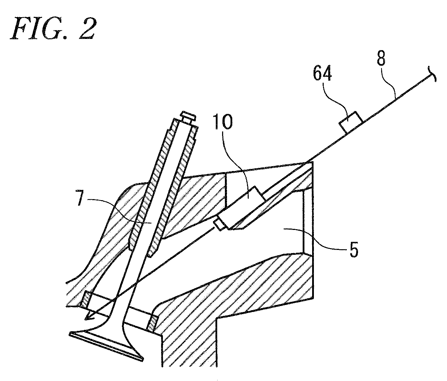

The internal combustion engine of the invention will be described with reference to Figs. 1 and 2.

Fig. 1 shows the schematic configuration of the overall internal combustion engine related to one embodiment of the invention, and Fig. 2 shows the configuration around an intake port.

As shown in Fig. 1, an ignition plug 3 for each cylinder is attached to a cylinder head 2 of an engine body (hereinafter referred to as "engine") 1 which is an internal combustion engine (engine), and an ignition coil 4 which outputs a high voltage is connected to the ignition plug 3. The cylinder head 2 is formed with an intake port 5 (intake passage) for each cylinder, and an intake valve 7 is provided on the side of a combustion chamber 6 of each intake port 5. The intake valve 7 is opened or closed following the cam of the cam shaft (not shown) which rotates according to the rotation of the engine so as to perform communication or blocking between each intake port 5 and the combustion chamber 6.

One end of an intake manifold 9 is connected to each intake port 5, and the intake manifold 9 communicates with the intake port 5. An electromagnetic fuel injection valve (injector) 10 is attached to the cylinder head 2, and fuel is supplied to the injector 10 via a fuel pipe 8 from a fuel tank. The electromagnetic fuel injection valve 10 may be attached to the intake manifold 9.

Additionally, the cylinder head 2 is formed with an exhaust port 11 for each cylinder, and an exhaust valve 12 is provided on the side of the combustion chamber 6 of the exhaust port 11. The exhaust valve 12 is opened or closed following the cam of the cam shaft (not shown) which rotates according to the rotation of the engine so as to perform the communication or blocking between each exhaust port 11 and the combustion chamber 6. Also, one end of an exhaust manifold 13 is connected to each exhaust port 11, and the exhaust manifold 13 communicates with the exhaust port 11.

Moreover, since an engine of this type is known, details of the configuration thereof are omitted.

An intake pipe 14 is connected to the intake manifold 9 on the upstream side of the injector 10, an electromagnetic throttle valve 15 is attached to the intake pipe 14, and the intake pipe 14 is provided with a throttle position sensor 16 which detects the opening degree of the throttle valve 15. The stepped amount of an accelerator pedal 61 is detected by an accelerator position sensor 62, and the throttle valve 15 is operated on based on the detection information of the accelerator position sensor 62.

An air flow sensor 17 which measures intake air amount is provided on the upstream side of the throttle valve 15. As the air flow sensor 17, a Karman vortex type and a hot film type air flow sensor may be used. Additionally, the intake pipe 14 between the intake manifold 9 and the throttle valve 15 is provided with a surge tank 18.

An exhaust pipe 20 is connected to the other end of the exhaust manifold 13, and an exhaust gas recirculation port (EGR port) 21 branches to the exhaust manifold 13. One end of an EGR pipe 22 is connected to the EGR port 21, and the other end of the EGR pipe 22 is connected to the intake pipe 14 of an upstream portion of the surge tank 18. The EGR pipe 22 close to the surge tank 18 is provided with an EGR valve 23. As, the EGR valve 23 is opened, a portion of exhaust gas is introduced into the intake pipe 14 of the upstream portion of the surge tank 18 via the EGR pipe 22.

That is, the EGR pipe 22 and the EGR valve 23 constitute an exhaust gas recirculation means (EGR device). The EGR device is a device which recirculates a portion of the exhaust gas to an intake system (surge tank 18) of the engine 1, lowers the combustion temperature within the combustion chamber 6 of the engine 1, and reduces the discharge amount of nitrogen oxide (NOx). As the EGR valve 23 is opened or closed, a part of the exhaust gas is recirculated to an intake system as EGR gas at a predetermined EGR rate according to an opening degree.

Additionally, as the exhaust gas is recirculated to the intake system of the engine 1 by the EGR device, the amount of air which is controlled by the throttle valve 15 can be reduced. That is, even if the throttle valve 15 is opened, a large amount of air does not flow in, and the throttling loss of the throttle valve 15 can be reduced.

Meanwhile, the intake manifold 9 is provided with a tumble flap 25, and the tumble flap 25 is opened or closed by an actuator 26, such as a negative pressure actuator. The tumble flap 25 is constituted by an openable/closable valve, such as a butterfly valve or a shutter valve, and the tumble flap 25, as shown in Fig. 1, is adapted to open or close the lower half of the intake passage. That is, an opening portion is formed on the upper side of a cross-section of the intake passage by closing the tumble flap 25, and a vertical tumble stream is generated inside the combustion chamber 6 by narrowing the cross-sectional area of the intake passage.

Additionally, the intake pipe 14 of the upstream portion of the surge tank 18 is provided with a supercharger 51. In the supercharger 51, exhaust gas of the engine 1 rotates an exhaust turbine 51 a provided at the exhaust manifold 13, intake air is pressurized and increased in volume density by the operation of an intake compressor 51 b directly connected to the exhaust turbine 51a, and the intake air which is pressurized and increased in volume density is sent to the combustion chamber 6. That is, intake air can be supercharged to increase torque.

In addition, although an exhaust turbo type supercharger is illustrated as the supercharger 51, it is also possible to apply a supercharger which operates as power is transmitted thereto from an output shaft of the engine 1 or a supercharger operated by the power of an electric actuator.

An exhaust purifying catalyst (for example, a ternary catalyst) 55 is interposed in the exhaust pipe 20 connected to the exhaust manifold 13, and exhaust gas is purified by the exhaust purifying catalyst 55. For example, in the exhaust purifying catalyst 55, hydrocarbons (HC), carbon monoxide (CO), and nitrogen oxide (NOx), and the like in exhaust gas are purified when the exhaust air-fuel ratio is near the theoretical air-fuel ratio (stoichiometric ratio). Additionally, when the exhaust air-fuel ratio has reached an oxidation atmosphere (lean air-fuel ratio), HC or CO is oxidized or purified, and oxygen (O₂) is stored until the exhaust air-fuel ratio reaches a reduction atmosphere (rich air-fuel ratio). When the exhaust air-fuel ratio has reached the rich air-fuel ratio, NOx is reduced or purified, the stored O₂ is released, and HC or CO is oxidized or purified.

The engine 1 is provided with a variable valve mechanism 63 which arbitrarily changes the lift amount and lift timing (valve operating conditions) of the intake valve 7 and the exhaust valve 12. As the phase of the cam is changed by the variable valve mechanism 63, the operating conditions of the intake valve 7 and the exhaust valve 12 are arbitrarily set. For example, the intake valve 7 is opened before the exhaust valve 12 is closed, and an overlap is formed in a valve opening period of the exhaust valve 12 and the intake valve 7.

By forming an overlap between the exhaust valve 12 and the intake valve 7, a portion of intake air can be blown off to the exhaust side, thereby increasing the flow rate of exhaust gas to increase the amount of the exhaust gas which flows into the exhaust turbine 51 a to raise the supercharge pressure caused by the supercharger 51. Additionally, even if the supercharge pressure is constant, the overlap between the valve opening periods of the exhaust valve 12 and the intake valve 7 is made large and the residual gas is evacuated within a cylinder, so that the amount of fresh air can be increased and torque can be increased.

Additionally, the fuel pipe 8 is provided with a fuel pressure sensor 64 which detects the pressure (actual fuel pressure) of the fuel supplied to the injector 10. Moreover, the engine 1 is provided with a crank angle sensor 32 which detects a crank angle to obtain an engine rotation number (Ne), and a water temperature sensor 33 which detects the temperature of cooling water.

ECU (Electronic Control Unit) 31 includes an input/output unit, a storage unit (ROM, RAM, and the like), a central processing unit (CPU), a timer counter, and the like. The overall control of the engine 1 is performed by the ECU 31.

Various sensors, such as the above-described throttle position sensor 16, air flow sensor 17, crank angle sensor 32, water temperature sensor 33, accelerator position sensor 62, and fuel pressure sensor 64, are connected to the input side of the ECU 31, and the detection information of these sensors are input thereto. Additionally, the information of the variable valve mechanism 63 is input to the ECU 31, and information on the lift amount and lift timing of the intake valve 7 and the exhaust valve 12 is sent to the ECU 31.

Meanwhile, various output devices, such as the above-described ignition coil 4, the throttle valve 15, the driving device of the injector 10, the EGR valve 23, the actuator 26 of the tumble flap 25, and the variable valve mechanism 63, are connected to the output side of the ECU 31. Fuel injection amount, fuel injection period, fuel injection timing, ignition timing, the operation timing and operation amount (recirculation amount of exhaust gas: EGR amount) of the EGR valve 23, the operation timing of the tumble flap 25, and the operating conditions (valve operating conditions) of the intake valve 7 and the exhaust valve 12, which are calculated by the ECU 31 on the basis of the detection information of the various sensors, are output to these various output devices.

The air-fuel ratio is set to a proper target air-fuel ratio on the basis of the detection information from the various sensors, the fuel of the amount according to the target air-fuel ratio is injected from the injector 10 at the proper timing, the throttle valve 15 is adjusted to a proper degree of opening, and spark ignition is implemented at the proper timing by the ignition plug 3.

The engine 1 of the present embodiment is adapted to inject fuel from the injector 10 during an intake stroke and inject fuel from the injector 10 during an exhaust stroke. In addition, if the intake valve 7 is being opened when the injected fuel has reached the vicinity of the intake valve 7, this case is defined as intake stroke injection. If the intake valve 7 has not yet been opened, this case is defined as exhaust stroke injection. In practice, since there exist time delays, such as a valve opening delay of an injector valve until the fuel reaches the vicinity of the intake valve 7 from an injector driving command, and a transport delay from the injector 10 to the intake valve 7, the injector driving command for the intake stroke injection may be performed during an exhaust stroke.

By injecting fuel during an intake stroke (while the intake valve 7 is opened), adhesion of fuel to an umbrella portion of the intake port 5 or the intake valve 7 is suppressed, so that the latent heat of vaporization of the fuel can be utilized for cooling the intake air.

For this reason, the temperature of an air-fuel mixture can be lowered to suppress the occurrence of knocking, the air density can be raised to increase the intake air amount at the time of full load, and even in port injection, and the effect of intake cooling can be exhibited to the maximum extent. Additionally, it is possible to inject fuel during an intake stroke to form a stratified air-fuel mixture within a cylinder, gather a fuel-rich portion of the air-fuel mixture around the ignition plug, and improve the stability of the ignition caused by spark ignition.

As shown in Fig. 2, as for the fuel injection using the injector 10, while the intake valve 7 is being opened, the fuel passes between a valve seat of the intake port 5 and the umbrella portion of the intake valve 7, and is directed to the inside of the combustion chamber 6. In this case, a tumble stream within the combustion chamber 6 can be intensified by unevenly distributing fuel on the upper side in the drawing across a valve shaft by the flow induced by the fuel injection. Additionally, the swirl stream within the combustion chamber 6 can be intensified by unevenly distributing fuel on any one in the right and left directions across the valve shaft.

That is, by suppressing collision of a mist against a wall surface and making the mist flow into a cylinder directly, intra-cylinder flow and turbulence can be intensified by the momentum of the mist, and it is possible to promote flame propagation, and improve combustion stability.

An air-fuel mixture in which fuel and air are sufficiently mixed uniformly inside the intake port 5 is obtained by injecting fuel from the injector 10 during an exhaust stroke. Since the injector 10 is provided at the intake port 5, the injector has a simple attachment structure which does not require securing of temperature resistance or pressure resistance, without being exposed to high-temperature and high-pressure combustion gas. Additionally, since it is not necessary to inject high-pressure fuel, the effect on the performance resulting from the power loss of the pump can be made small.

For this reason, by controlling the conditions of the fuel injection to the intake passage without providing within a cylinder a direct-injection injector which injects fuel directly into the cylinder, i.e., by setting the ratio of fuel injection in an intake stroke and fuel injection in an exhaust stroke according to operating conditions, it is possible to maintain performance in a case where fuel is directly injected into the cylinder, and obtain high performance.

The ratio of fuel injection in an intake stroke and fuel injection in an exhaust stroke is set by an injection control means of the ECU 31 according to the operating conditions of the engine 1.

Also, as the EGR valve 23 is opened and closed, a portion of exhaust gas is recirculated to an intake system as an EGR gas at a predetermined EGR rate according to an opening degree, the combustion temperature within the combustion chamber 6 of the engine 1 is lowered, and the emission amount of nitrogen oxide (NOx) is reduced. Additionally, by recirculating the exhaust gas to the intake system of the engine 1 using the EGR device, the amount of air regulated by the throttle valve 15 can be reduced, and the throttling loss of the throttle valve 15 can be decreased to reduce fuel costs.

For this reason, in the present embodiment, attention is paid to the fact that turbulence can be caused in the intake air by the momentum of the fuel injection even in a low-load and low-rotation region where the flow and turbulence within a cylinder is weak, and fuel costs are reduced by recirculating exhaust gas using the EGR device. Specifically, the ratio of the intake stroke injection is increased according to the recirculation amount (EGR amount) of exhaust gas using the EGR device. Generally, when the recirculation amount of exhaust gas increases, the concentration of oxygen within a cylinder drops, and combustion stability deteriorates. However, by increasing the ratio of the intake stroke injection, the turbulence within a cylinder can be promoted and flame propagation can be promoted to improve combustion stability.

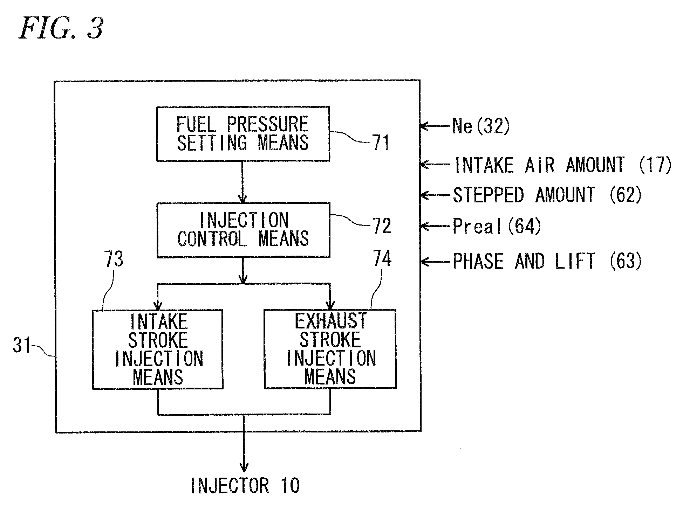

Specific control conditions will be described with reference to Figs. 3 to 6.

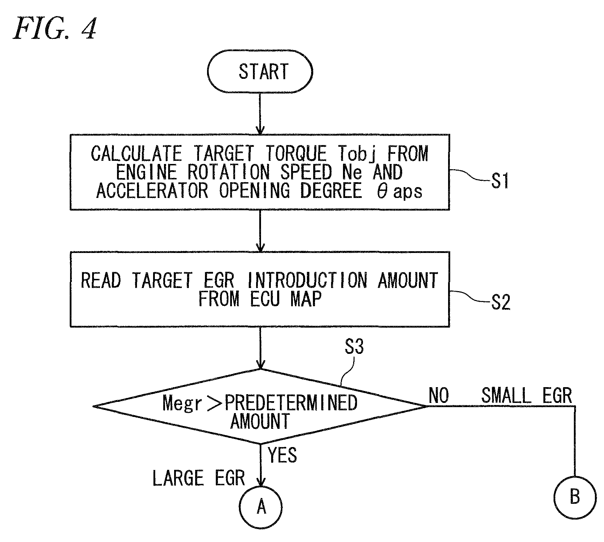

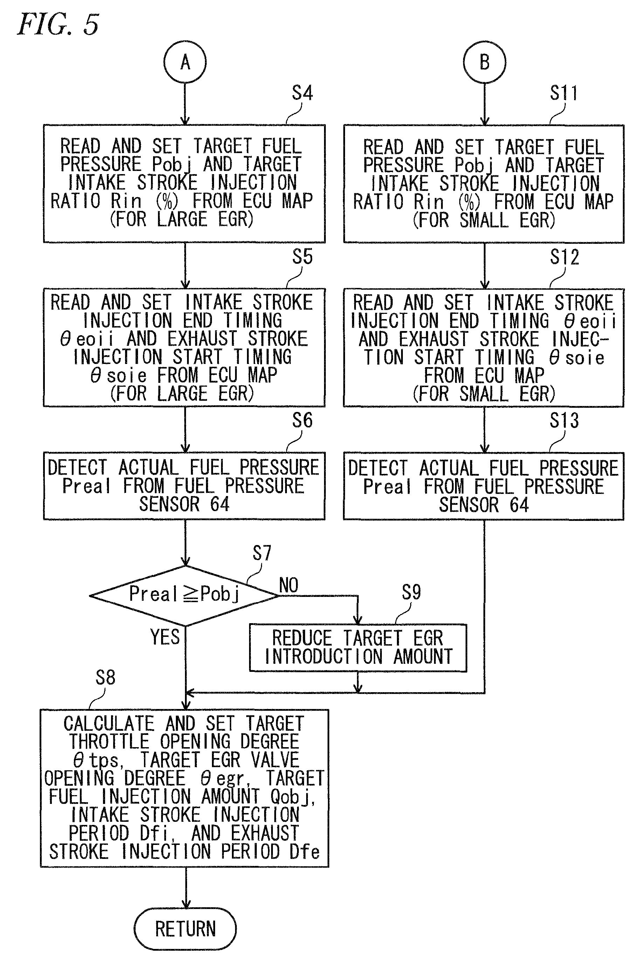

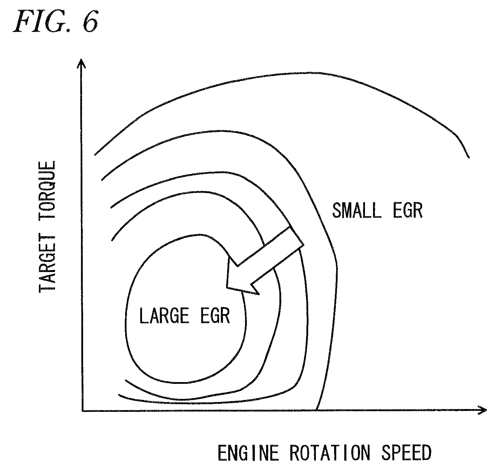

Fig. 3 shows schematic blocks showing the functions of injection control, Figs. 4 and 5 show flows describing a situation of the fuel injection using an injection control means, and Fig. 6 shows a map for setting an EGR amount.

As shown in Fig. 3, the engine rotation speed (Ne) based on the detection information of the crank angle sensor 32, the detection information of the air flow sensor 17, the detection information of the accelerator position sensor 62, an actual fuel pressure (Preal) based on the detection information of the fuel pressure sensor 64, and phase and lift information (valve phase and valve lift) based on the information of the variable valve mechanism 63 are input to the ECU 31.

The ECU 31 is provided with a fuel pressure setting means 71 which sets fuel pressure (target fuel pressure: Pobj) according to the engine rotation speed (Ne) and load (intake air amount or the like) of the engine 1. The target fuel pressure (Pobj) set by the fuel pressure setting means 71 is sent to an injection control means 72. In the injection control means 72, the ratio of the fuel injection in the intake stroke injection and the fuel injection in the exhaust stroke injection is set according to the target fuel pressure (Pobj), and the engine rotation speed (Ne) and load (intake air amount or the like) of the engine 1.

In the ECU 31, a target recirculation amount (target EGR amount) of exhaust gas is set (setting means) on the basis of operating conditions, for example, rotation speed and engine load 1, and it is also determined whether or not the target EGR amount exceeds a predetermined value.

Additionally, the ECU 31 is provided with an intake stroke injection means 73 which injects fuel from the injector 10 during an intake stroke, and an exhaust stroke injection means 74 which injects fuel from the injector 10 during an exhaust stroke. Driving commands are sent to the injector 10 from the intake stroke injection means 73 and the exhaust stroke injection means 74, and a predetermined amount of fuel is injected at a predetermined stroke timing. Also, the injection control means 72 is adapted to increase the operation ratio of the intake stroke injection means 73 such that the injection of fuel in an intake stroke is increased according to the target EGR amount.

The information ratio of the fuel injection in the intake stroke injection and the fuel injection in the exhaust stroke injection which are set by the injection control means 72 is sent to the intake stroke injection means 73 and the exhaust stroke injection means 74, and driving commands are sent to the injector 10 from the intake stroke injection means 73 and the exhaust stroke injection means 74 according to the information on the ratio.

Additionally, when the operation ratio of the intake stroke injection means 73 is increased by the ECU 31, the fuel pressure of the fuel injection is set to be high. Moreover, if an actual fuel pressure does not meet the target fuel pressure (Pobj), the EGR device is controlled by the ECU 31 such that the target EGR amount is decreased.

Specific processing conditions will be described with reference to Figs. 4 to 6.

As shown in Fig. 4, when processing is started, in Step S1, a target torque (Tobj) is calculated from the engine rotation speed (Ne) and accelerator opening degree (θaps). In Step 2, the target EGR amount (target EGR introduction amount: Megr) is read in from an ECU map. The target EGR introduction amount (Megr), as shown in the ECU map of Fig. 6 is set so as to be become a large amount of EGR introduction amount (large EGR) in a region where the target torque and the engine rotation speed are low, i.e., in a low-load and low-rotation region.

That is, fuel costs can be reduced by increasing the EGR introduction amount in a low-load and low-rotation region, reducing the air amount regulated by the throttle valve 15, and reducing the throttling loss of the throttle valve 15. Additionally, the combustion temperature within the combustion chamber 6 is lowered, and the emission amount of nitrogen oxide (NOx) is reduced.

In Step S3, it is determined whether or not the target EGR introduction amount (Megr) is greater than a predetermined value. If it is determined that the target EGR introduction amount (Megr) is greater than a predetermined value (predetermined amount), i.e., it is determined that the EGR introduction amount is large in the low-load and low-rotation region or the like, the processing proceeds to the flow chart (A) of the Fig. 5, the injection of fuel in an intake stroke is increased, and the fuel pressure is made high.

In Step S3, if it is determined that the target EGR introduction amount (Megr) is not greater than a predetermined value, i.e., it is determined that there is not an operation region where a large amount of EGR is introduced, the processing proceeds to the flow chart (B) of the Fig. 5, and the operation ratio of the intake stroke injection means 73 and the exhaust stroke injection means 74 is set according to operating conditions.

That is, although details will be described in the flow chart of Fig. 5, if the EGR amount is large in a low-load and low-rotation region, a control is made such that the ratio of the injection stroke injection is increased to intensify the turbulence within a cylinder, thereby promoting flame propagation to improve combustion stability.

In Step S3, if it is determined that the target EGR introduction amount (Megr) is greater than a predetermined value, the processing proceeds to Step S4 of the flow chart (A) of the Fig. 5. In Step S4, the target fuel pressure (Pobj) and the target intake stroke injection ratio (Rin: %) are read and set from the ECU map. The ECU map at this time is a map (map for large EGR) when the target EGR introduction amount is large, the target fuel pressure (Pobj) is set to Phegr, and the target intake stroke injection ratio (Rin) is set to Rhegr.

Phegr is set to a value of the fuel pressure (Plegr) or higher of a map in a condition which is not an operation region where a large amount of EGR is introduced (Phegr≥Plegr), which will be described later. Additionally, Rhegr is set to a value greater than the intake stroke injection ratio (Rlegr) of a map in a condition which is not the operation region where a large amount of EGR is introduced (Rhegr>Rlegr).

In Step S5, the intake stroke injection end timing (θeoii) and the exhaust stroke injection start timing (θsoie) are read and set from the ECU map. The ECU map at this time is a map (map for large EGR) when the target EGR introduction amount is large. As for the injection of fuel, the intake stroke injection end timing (θeoii) and the exhaust stroke injection start timing (θsoie) are fixed, and the intake stroke injection start timing (θsoii) and the exhaust stroke injection end timing (θeoie) are made variable.

The processing proceeds to Step S6 where the actual fuel pressure (Preal) is detected from the fuel pressure sensor 64. In Step S7, it is determined whether or not the actual fuel pressure (Preal) is equal to or greater than target fuel pressure (Pobj). If it is determined in Step S7 that the actual fuel pressure (Preal) is equal to or greater than target fuel pressure (Pobj), in Step S8, a target throttle opening degree (θtps), a target EGR valve opening degree (θegr) which is the targeted opening degree of the EGR valve 23, a target fuel injection amount (Qobj), an intake stroke injection period (Dfi), and an exhaust stroke injection period (Dfe) are calculated and set, and the processing proceeds to return.

That is, the ratio of the intake stroke injection is increased to inject fuel into a cylinder to intensify the turbulence within the cylinder, on the condition that the EGR amount is large in the low-load and low-rotation region or the like and combustion stability deteriorates. Thereby, it is possible to promote flame propagation to improve combustion stability.

Thereby, compared to a case where the ratio of the intake stroke injection is not increased, the EGR introduction amount can be set to be large, and the air amount regulated by the throttle valve 15 can be reduced, and the throttling loss of the throttle valve 15 can be reduced to reduce fuel costs.

If it is determined in Step S7 that the actual fuel pressure (Preal) is not equal to or greater than the target fuel pressure (Pobj), i.e., if it is determined that the actual fuel pressure (Preal) falls below the target fuel pressure (Pobj), the target EGR introduction amount is reduced in Step S9, and the processing proceeds to Step S8. The case where it is determined that the actual fuel pressure (Preal) falls below the target fuel pressure (Pobj) also includes a case where the actual fuel pressure (Preal) has dropped at the time of transition.

In Step S8, the target throttle opening degree (θtps), the target EGR valve opening degree (θegr) which is the targeted opening degree of the EGR valve 23, the target fuel injection amount (Qobj), the intake stroke injection period (Dfi), and the exhaust stroke injection period (Dfe) are calculated and set according to the reduced target EGR amount, and the processing proceeds to return.

In Step S3, if it is determined that the target EGR introduction amount (Megr) is not greater than a predetermined value, the processing proceeds to Step S11 of the flow chart (B) of the Fig. 5. In Step S11, the target fuel pressure (Pobj) and the target intake stroke injection ratio (Rin: %) are read and set from the ECU map. The ECU map at this time is a map (map for small EGR) when the target EGR introduction amount is not large, the target fuel pressure (Pobj) is set to Plegr, and the target intake stroke injection ratio (Rin) is set to Rlegr.

Plegr is set to a value of the fuel pressure (Phegr) or lower of a map in the operation region where a large amount of EGR is introduced (Phegr≥Plegr), as described above. Additionally, Rlegr is set to a value smaller than the intake stroke injection ratio (Rhegr) of a map in the operation region where a large amount of EGR is introduced (Rhegr>Rlegr).

In Step S12, the intake stroke injection end timing (θeoii) and the exhaust stroke injection start timing (θsoie) are read and set from the ECU map. The ECU map at this time is a map (map for small EGR) when the target EGR introduction amount is small. As for the injection of fuel, the intake stroke injection end timing (θeoii) and the exhaust stroke injection start timing (θsoie) are fixed, and the intake stroke injection start timing (θsoii) and the exhaust stroke injection end timing (θeoie) are made variable.

After the intake stroke injection end timing (θeoii) and the exhaust stroke injection start timing (θsoie) are set in Step 12, the processing proceeds to S13 where the actual fuel pressure (Preal) is detected from the fuel pressure sensor 64, and the processing proceeds to Step S8. In Step S8, the target throttle opening degree (θtps), the target EGR valve opening degree (θegr) which is the targeted opening degree of the EGR valve 23, a target fuel injection amount (Qobj), the intake stroke injection period (Dfi), and the exhaust stroke injection period (Dfe) are calculated and set according to a situation where a large amount of EGR is not introduced, and the processing proceeds to return.

In the above-described engine 1, the conditions of fuel injection into the intake passage from the injector 10 and the fuel pressure are controlled without providing within a cylinder a direct-injection injector which injects fuel directly into the cylinder, i.e., the ratio of fuel injection in an intake stroke and fuel injection in an exhaust stroke, and the fuel pressure are set according to operating conditions, and optimization of exhaust gas, fuel costs, and output is realized.

For this reason, in a high-load region, an intake cooling state and a state of improved filling efficiency in a case where fuel is directly injected into the cylinder can be maintained by fuel injection in an intake stroke, and it is possible to obtain high performance, such as suppressing knocking. Additionally, in a low-load region, deterioration of mixing can be prevented by the injection of the fuel into the intake passage in an intake stroke, in a state where the power loss of the fuel pump is reduced.

Also, in an operation region (mainly, a low-speed and low-load operation region) wherein a large amount of EGR is introduced, the turbulence within a cylinder is intensified by increasing the ratio of the intake stroke injection and raising the fuel pressure. Accordingly, if the EGR amount is large in a low-load and low-rotation region or the like, it is possible to increase the ratio of the intake stroke injection, and intensify the turbulence within a cylinder, thereby promoting flame propagation, and improving combustion stability. As a result, the EGR introduction amount is increased to reduce the air amount regulated by the throttle valve 15 to reduce the throttling loss of the throttle valve 15, so that fuel costs can be reduced.

In addition, although description has been made using an EGR pipe and an EGR valve as the exhaust gas recirculation means in the present embodiment, the invention can be applied to changing the valve opening timing of the intake valve or the valve opening timing of the exhaust valve, thereby controlling the EGR introduction amount.

### Industrial Applicability

The invention can be utilized in the industrial field of the internal combustion engine which can control the conditions of fuel injection into an intake passage, thereby improving performance without directly providing within a cylinder a fuel injection device which injects fuel directly into the cylinder.

## Claims

1. An internal combustion engine, comprising:
an injector which injects fuel into an intake passage;
an intake stroke injection means which causes the injector to inject fuel during an intake stroke;
an exhaust stroke injection means which causes the injector to inject fuel during an exhaust stroke;
an exhaust gas recirculation means which recirculates a part of exhaust gas to an intake system;
a setting means which sets the conditions of a recirculation of the exhaust gas by the exhaust gas recirculation means; and
an injection control means which controls an operation ratio of the intake stroke injection means and the exhaust stroke injection means according to the condition of the recirculation of the exhaust gas by the setting means, **characterized in that** in a case where it is determined that target recirculation amount set by the setting means exceeds a predetermined value, the injection control means increases the operation ratio of the intake stroke injection means to increase a fuel injection ratio in an intake stroke.

2. The internal combustion engine according to Claim 1,
wherein the setting means sets the target recirculation amount of the exhaust gas, based on a rotation speed and a load of the internal combustion engine.

3. The internal combustion engine according to Claim 1,
wherein the injection control means sets a fuel pressure to be increased when the operation ratio of the intake stroke injection means is increased.

4. The internal combustion engine according to Claim 3, further comprising
a fuel pressure detecting means which detects a fuel pressure,
wherein the exhaust gas recirculation means reduces the target recirculation amount of the exhaust gas in a case where an actual fuel pressure detected by the fuel pressure detecting means is less than a target fuel pressure.

## Patentansprüche

1. Verbrennungsmotor, mit:
einer Einspritzdüse, die Kraftstoff in einen Einlasskanal einspritzt;
einer Einlasshub-Einspritzeinrichtung, die bewirkt, dass die Einspritzdüse während eines Einlasshubs Kraftstoff einspritzt;
einer Auslasshub-Einspritzeinrichtung, die bewirkt, dass die Einspritzdüse während eines Auslasshubs Kraftstoff einspritzt;
einer Abgasrückführungseinrichtung, die einen Teil des Abgases zu einem Einlasssystem zurückführt;
einer Einstelleinrichtung, die die Bedingungen einer Rückführung des Abgases durch die Abgasrückführungseinrichtung einstellt; und
einer Einspritzsteuereinrichtung, die ein Betriebsverhältnis der Einlasshub-Einspritzeinrichtung und der Auslasshub-Einspritzeinrichtung entsprechend der Bedingung der Rückführung des Abgases durch die Einstelleinrichtung steuert, dadurch gekeririzeichnet, dass
in einem Fall, wenn festgestellt wird, dass ein durch die Einstelleinrichtung eingestellter Sollrückführungsbetrag einen vorgegebenen Wert überschreitet, die Einspritzsteuereinrichtung das Betriebsverhältnis der Einlasshub-Einspritzeinrichtung erhöht, um ein Kraftstoffeinspritzverhältnis in einem Einlasshub zu erhöhen.

2. Verbrennungsmotor nach Anspruch 1,
wobei die Einstelleinrichtung den Sollrückführungsbetrag des Abgases beruhend auf einer Drehzahl und einer Belastung des Verbrennungsmotors einstellt.

3. Verbrennungsmotor nach Anspruch 1,
wobei die Einspritzsteuereinrichtung einen Kraftstoffdruck so einstellt, dass er erhöht wird, wenn das Betriebsverhältnis der Einlasshub-Einspritzeinrichtung erhöht wird.

4. Verbrennungsmotor nach Anspruch 3, der ferner aufweist
eine Kraftstoffdruck-Ermittlungseinrichtung, die einen Kraftstoffdruck ermittelt,
wobei die Abgasrückführungseinrichtung den Sollrückführungsbetrag des Abgases in einem Fall reduziert, wenn ein durch die Kraftstoffdruck-Ermittlungseinrichtung ermittelter tatsächlicher Kraftstoffdruck kleiner als ein Sollkraftstoffdruck ist.

## Revendications

1. Moteur à combustion interne, comprenant :
un injecteur injectant du carburant dans un collecteur d'admission ;
un moyen d'injection en course d'admission provoquant l'injection de carburant par l'injecteur pendant une course d'admission;
un moyen d'injection en course d'échappement provoquant l'injection de carburant par l'injecteur pendant une course d'échappement ;
un moyen de recirculation des gaz d'échappement recyclant une partie des gaz d'échappement vers un système d'admission ;
un moyen de réglage fixant les conditions de recyclage des gaz d'échappement par le moyen de recirculation des gaz d'échappement ; et
un moyen de commande d'injection commandant un rendement du moyen d'injection en course d'admission et du moyen d'injection en course d'échappement en fonction de la condition de recyclage des gaz d'échappement par le moyen de réglage, **caractérisé en ce que**, s'il est déterminé qu'un débit de recyclage de consigne fixé par le moyen de réglage dépasse une valeur prédéfinie, le moyen de commande d'injection augmente le rendement du moyen d'injection en course d'admission pour accroître un taux d'injection de carburant dans une course d'admission.

2. Moteur à combustion interne selon la revendication 1,
où le moyen de réglage fixe le débit de recyclage de consigne du gaz d'échappement sur la base d'une vitesse de rotation et d'une charge du moteur à combustion interne.

3. Moteur à combustion interne selon la revendication 1,
où le moyen de commande d'injection fixe une pression de carburant à augmenter quand le rendement du moyen d'injection en course d'admission est accru.

4. Moteur à combustion interne selon la revendication 3, comprenant en outre
un moyen de détection de pression de carburant détectant une pression du carburant, le moyen de recirculation des gaz d'échappement diminuant le débit de recyclage de consigne des gaz d'échappement si une pression effective de carburant détectée par le moyen de détection de pression de carburant est inférieure à une pression de carburant de consigne.
